# EUROPEAN PATENT APPLICATION

(11) **EP 3 117 976 A1**
(43) Date of publication of application: **18.01.2017**
(21) Application number: 15761933.9
(22) Date of filing: 18.02.2015
(51) Int. Cl.: B29C 35/02

(54) **RIGID CORE FOR TIRE MOLDING AND TIRE MANUFACTURING METHOD**

(30) Priority: 14.03.2014 JP 2014051172
(71) Applicant: Sumitomo Rubber Industries, Ltd., Kobe-shi, Hyogo 651-0072 (JP)
(72) Inventor: YAGUCHI, Masashi, Kobe-shi Hyogo 651-0072 (JP)
(74) Representative: TBK
(86) International application number: PCT/JP2015/054478
(87) International publication number: WO 2015/137066

(57) **Abstract**

There was a demand for: a rigid core for tire molding that is formed using lighter weight segments with sufficiently low coefficient of thermal expansion and sufficient hardness and strength instead of conventional segments that had a variety of problems; and a tire manufacturing method, which is capable of manufacturing tires with improved productivity without causing increased size of molding equipment or vulcanization equipment by using said rigid core for tire molding. A rigid core for tire molding having a core body on the outer surface of which a tire-molding surface is formed and a cylindrical core that is inserted in the central hole of the core body, the rigid core being characterized in that the core body is formed in a ring-shape by multiple core segments that are divided in the tire circumference direction and the core segments are manufactured using a carbon fiber-reinforced resin.

## Description

### [TECHNICAL FIELD]

The present invention relates to a rigid core for tire molding, more particularly, to a rigid core for tire molding giving high molding accuracy and light in weight, and to a tire manufacturing method for manufacturing tires using the rigid core for tire molding.

### [BACKGROUND ART]

In recent years, it has been proposed that a rigid core for tire molding (hereafter also simply referred to as "rigid core") is used to enhance the molding accuracy of tires in the manufacturing of tires (for example, refer to Patent Documents 1 to 3).

This rigid core has a core body having an outer shape matching with the inner face shape of a vulcanized tire and a cylindrical core to be inserted into the center hole of the core body. A raw tire is molded by sequentially bonding tire constituting members onto the core body. The molded raw tire is then put into a vulcanizing mold together with the rigid core, and the raw tire is vulcanized and molded while being held between the core body serving as an inner mold and the vulcanizing mold serving as an outer mold.

The core body is composed of a plurality of core segments (hereafter also simply referred to as "segments") divided in the circumferential direction of the tire so that the core body is disassembled and removed from the tire after vulcanization and molding. The core body is formed into a ring-shaped core body by mutually butting the circumferential end faces of the segments adjacent to each other.

These segments are formed using aluminum or aluminum alloy having high thermal conductivity to enhance energy efficiency during heating.

### [PRIOR ART DOCUMENTS]

### [Patent Documents]

Patent Document 1: JP-A-2013-6390
Patent Document 2: JP-A-2013-6367
Patent Document 3: JP-A-2013-146905

### [SUMMARY OF the INVENTION]

### [PROBLEM TO BE SOLVED BY the INVENTION]

However, aluminum is high in thermal expansion coefficient while it is high in thermal conductivity. Hence, when the segments are designed, it is necessary to secure a sufficient clearance between the segments adjacent to each other so that interference due to thermal expansion does not occur between them.

However, this clearance is not blocked until the segments are heated to the vulcanization temperature and expanded by heat. Hence, rubber is liable to penetrate through the clearance between the segments until the segments are heated, whereby there is a risk that rubber may protrude to the inner face of the vulcanized tire and the side faces of the segments. The rubber protruding and remaining on the side faces of the segments are required to be removed before the next tire molding process.

Furthermore, the clearance is required to be adjusted severely to secure the matching accuracy of the segments, whereby there is a risk that the improvement in productivity may be hindered. Moreover, since the segments are expanded by heat, it is liable to become difficult to secure the stability of dimensional accuracy during vulcanization.

What's more, aluminum is low in hardness and the surface of the segment made of aluminum is liable to be scratched. Hence, if the portion (tire molding face) of the segment making contact with the inner face of the tire is scratched, the scratches will be transferred to the inner face of the tire.

Still further, since aluminum is not sufficient in hardness, the gauge of the segment is required to be thicker to secure sufficient strength. As a result, the weight of the entire rigid core becomes large, and a large burden is applied to the core holding mechanisms provided in a molding machine and a vulcanizing machine, whereby molding equipment and vulcanization equipment become larger in size.

Consequently, a rigid core for tire molding formed by using lightweight segments having a sufficiently low thermal expansion coefficient and sufficient hardness and strength instead of using the conventional segments having the above-mentioned various problems has been required. A tire manufacturing method capable of manufacturing tires at high productivity by using the above-mentioned rigid core for tire molding while molding equipment and vulcanization equipment do not become larger in size has also been required.

### [MEANS FOR SOLVING the PROBLEM]

As a result of extensive studies for solving the above-mentioned problems, the inventors of the present invention have found that the above-mentioned problems can be solved by the invention described below, thereby completing the present invention.

The inventive according to claim 1 is:
a rigid core for tire molding having a core body, on the outer surface of which a tire molding face is formed, and a cylindrical core to be inserted into the center hole of the core body, wherein
the core body is formed into a ring-shape by using a plurality of core segments divided in the circumferential direction of a tire, and
the core segments are made by using carbon fiber-reinforced resin.

The inventive according to claim 2 is:
a tire manufacturing method for manufacturing tires by using the rigid core for tire molding according to claim 1 having:
   the raw tire molding step of molding a raw tire by sequentially bonding tire constituting members onto the tire molding face of the core body of the rigid core for tire molding, and
   the vulcanizing molding step of vulcanizing and molding the raw tire by putting the molded raw tire into a vulcanizing mold together with the rigid core for tire molding.

### [Effect of the Invention]

The present invention can provide
a rigid core for tire molding formed by using lightweight segments having a sufficiently low thermal expansion coefficient and sufficient hardness and strength, and
a tire manufacturing method capable of manufacturing tires at high productivity by using the above-mentioned rigid core for tire molding while molding equipment and vulcanization equipment are not made large in size.

### [Brief Description of the Drawings]

Fig. 1 is a perspective view showing a core body in a rigid core for tire molding according to an embodiment of the present invention.
Fig. 2 is a side view showing the core body in a rigid core for tire molding according to the embodiment of the present invention.

### [EMBODIMENTS for IMPLEMENTING the INVENTION]

An embodiment according to the present invention will be described below referring to the drawings.

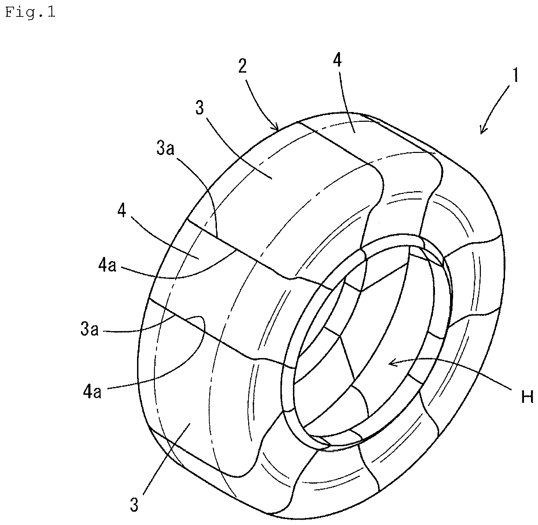

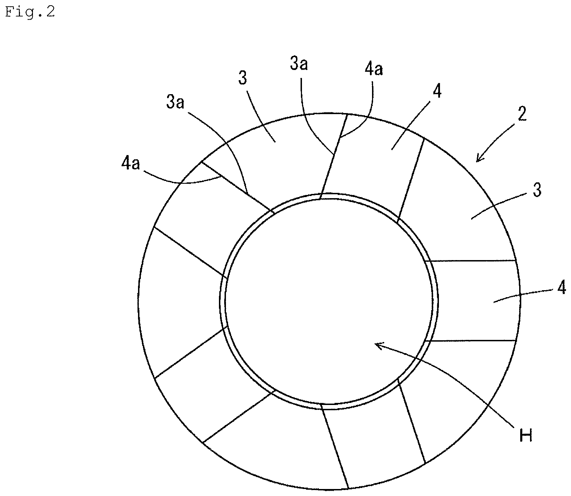

Figs. 1 and 2 are perspective and side views showing a core body in a rigid core for tire molding according to the embodiment.

As shown in Figs. 1 and 2, a rigid core for tire molding 1 has a core body 2 and a cylindrical core (not shown) to be inserted into the center hole H of the core body 2.

The core body 2 is formed into a ring shape by mutually butting the circumferential end faces 3a and 4a of a plurality of core segments (hereafter also simply referred to as "segments") 3 and 4 divided in the circumferential direction of a tire.

Then, a raw tire is molded by sequentially bonding tire constituting members onto the tire molding face of the core body 2 as described above. The molded raw tire is put into a vulcanizing mold (not shown) together with the rigid core and heated and pressurized between the core body 2 serving as an inner mold and the vulcanizing mold serving as an outer mold, whereby vulcanization molding is carried out.

The above-mentioned technology is basically similar to the conventional technology. However, the technology according to the embodiment is different from the conventional technology in that, instead of aluminum or aluminum alloy being used in the conventional technology, carbon fiber-reinforced resin is adopted as the material of the core segments 3 and 4.

In order to complete the present invention, when examining the selection of the material of the segments to be used instead of aluminum or aluminum alloy according to the conventional technology from among many materials, the inventors of the present invention have come up with an idea of using fiber-reinforced resin as a material having a low thermal expansion coefficient and sufficiently high hardness and strength in comparison with aluminum or aluminum alloy.

However, as a result of the examination, it has been found that it is difficult to adopt ordinary fiber-reinforced resin as the material of the segments since the heat applied to the inside of the segments is hardly transferred to the raw tire due to the low thermal conductivity of the resin and since there is a risk that the strength of the segments during vulcanization may become insufficient because the heat resistant temperature of the resin is lower than vulcanization temperature.

Hence, as a result of comprehensive experiments and examination on fiber-reinforced resin, the inventors have found that carbon fiber-reinforced resin can be adopted as the material of the segments.

First, since carbon fiber-reinforced resin is superior in thermal resistance, the strength of the segments does not become insufficient during vulcanization.

Next, since carbon fiber-reinforced resin has high strength even during vulcanization in comparison with aluminum or aluminum alloy, it is possible to provide segments ensuring sufficient strength without making the gauge of the segments thicker. As a result, the gauge of the segments can be made thinner. In addition, the carbon fiber-reinforced resin has low specific gravity in comparison with aluminum or aluminum alloy.

As a result, since the gauge of the segments can be made thinner as described above although the thermal conductivity of carbon fiber-reinforced resin is not higher than that of aluminum or aluminum alloy, the heat in the segments can be transferred to the raw tire sufficiently and efficiently.

Furthermore, since the thermal expansion coefficient of carbon fiber-reinforced resin is lower than aluminum or aluminum alloy, such a sufficient clearance as in the conventional technology is not required. Moreover, since the clearance can be adjusted easily, the distances between the segments can be aligned at sufficient accuracy, and the dimensional accuracy of the core body can be stabilized. As a result, the circularity of a tire is improved, whereby it is possible to provide a tire having stable dimensional accuracy. In addition, the occurrence of rubber protrusion can be reduced sufficiently, and tire productivity can be improved.

In addition, since carbon fiber-reinforced resin is high in hardness, the surface of the segment is hardly scratched for a long period of time, whereby there is no risk that scratches are transferred to the inside face of the tire and the segment can sufficiently withstand repeated usage.

Furthermore, since the gauge of the segments can be made thinner as described above and the segments can be made light in weight, a large burden is not applied to the core holding mechanisms provided in a molding machine and a vulcanizing machine, whereby molding equipment and vulcanization equipment are not made large in size.

Moreover, the segments manufactured by using carbon fiber-reinforced resin as a material are light in weight and do not rust, whereby the storage space for the segments can be obtained with a high degree of freedom and the space can be saved.

Consequently, it has been found that tires can be manufactured while high productivity is maintained by using the segments according to the embodiment.

In the embodiment, it is preferable that carbon fiber-reinforced resin should be formed
by mixing pitch-based carbon fiber obtained as a byproduct of petroleum refining or as a byproduct of dry distillation of coal, more particularly, anisotropic pitch-based carbon fiber made of anisotropic pitch exhibiting anisotropy in a molten state and being capable of sufficiently securing the thermal conductivity of the core segments, with thermoplastic resin capable of sufficiently securing the thermal resistance of the core segments, such as phenol resin, melamine resin, epoxy resin or urea resin. A member (prepreg) obtained by blending these in advance is heated and cured (autoclave molding method) in an autoclave (a furnace in which pressurization can be carried out) so as to be molded into a predetermined shape, whereby the segments are formed.

### [EXAMPLES]

The following are examples in which tires of size 245/45R18 are manufactured using the rigid core for tire molding having the core segments divided in the circumferential direction of the tire.

### 1. Manufacturing of core segments for rigid core for tire molding

### (1) Example

A mixture of 100 parts by weight of long fibrous anisotropic pitch-based carbon fiber (made by Mitsubishi Plastics Inc.) having a diameter of 7 to 11 µm and 30 parts by weight of epoxy resin (made by Mitsubishi Chemical Corporation) is poured into a metal mold formed into the shape of each segment and then heated and cured in an autoclave, and a core segment for a rigid core for tire molding, made of the carbon fiber-reinforced resin according to the embodiment and having a required strength, is manufactured.

### (2) Comparative example 1

A core segment for a rigid core for tire molding according to Comparative example 1 is manufactured by using glass fiber-reinforced resin (made by Nitto Boseki Co., Ltd.) having a diameter of 3 to 24 µm as fiber-reinforced resin and by adjusting the thickness of the segment so that the segment has a required strength equivalent to that of Example.

### (3) Comparative examples 2 to 4

Core segments according to Comparative examples 2 to 4 are manufactured by using aluminum, aluminum alloy (alloy consisting of aluminum and mainly magnesium) and stainless steel (SUS304) and by adjusting the thicknesses of the core segments so that the core segments have the required strength equivalent to that of Example. The core segment manufactured by using aluminum and the core segment manufactured by using aluminum alloy are the conventional core segments.

### 2. Manufacturing of tire

Tires (five tires for each example) of size 245/45R18 are each manufactured by sequentially bonding tire constituting members onto the core body formed into a ring shape using the core segments in a manner similar to the conventional technology and by carrying out vulcanization molding.

### 3. Evaluation

The core segments for the rigid core for tire molding and the tires obtained as described above are evaluated on the following items.

### (1) Surface strength

The surface of the core segment for each rigid core for tire molding is rubbed with a cutter knife, and the state of scratches formed on the surface is measured. Scratch resistance is evaluated by comparing the state with that in Comparative example 2 (the conventional core segment).

### (2) Core weight

The weight of the core segment for each rigid core for tire molding, manufactured so as to have the thickness for the required strength, is measured and evaluated by comparing the weight of the core segment with that in Comparative example 2 (the conventional core segment).

### (3) Vulcanization time

The vulcanization time during which an optimal vulcanization amount is obtained for each tire is measured and evaluated by comparing the vulcanization time with that in Comparative example 2 (the conventional core segment).

### (4) Rubber protrusion

The amount of rubber protrusion occurring during vulcanization is measured and evaluated by comparing the amount with that in Comparative example 2 (the conventional core segment).

### (5) Circularity

The circularity of each core body at the time when the temperature is raised to the vulcanization temperature is measured to examine the stability of the dimensional accuracy during vulcanization and evaluated by comparing the circularity with that in Comparative example 2 (the conventional core segment).

### (6) Processing cost

The processing cost is obtained by considering the material cost, the manufacturing cost, the delivery date, etc. of the core body for each rigid core for tire molding and evaluated by comparing the processing cost with that in Comparative example 2 (the conventional core segment).

### 4. Results of evaluation

Table 1 shows the expected results of the evaluation on the respective items. In Table 1, the result of the evaluation on each item of Comparative example 2 (the conventional core segment) is indicated by "Δ", the result superior to this is indicated by "⊚", the result slightly superior to this is indicated by "○", the result equivalent to this is indicated by "Δ", and the result inferior to this is indicated by "×".

**[Table 1]**

| | Material of core segment | Surface strength | Core weight | Vulcanization time | Rubber protrusion | Circularity | Processing cost |
|---|---|---|---|---|---|---|---|
| Example | Carbon fiber-reinforc ed resin | ⊚ | ⊚ | Δ | ⊚ | ⊚ | Δ |
| Comp. Example 1 | Glass fiber-reinforc ed resin | ⊚ | ⊚ | × | ⊚ | ○ | ○ |
| Comp. Example 2 | Aluminum | Δ | Δ | Δ | Δ | Δ | Δ |
| Comp. Example 3 | Aluminum alloy | ○ | Δ | Δ | ○ | Δ | × |
| Comp. Example 4 | Stainless steel | ⊚ | × | × | ○ | ○ | × |

In Table 1, it is shown that, in the case of the core segment (Example) made of carbon fiber-reinforced resin, the core segment is superior to the conventional core segment (Comparative example 2) in surface strength, core weight, rubber protrusion and circularity and is equivalent to Comparative example 2 in the remaining items, i.e., vulcanization time and processing cost.

On the other hand, in the case of the core segment (Comparative example 1) made of glass fiber-reinforced resin, the core segment of Comparative example 1 is superior in surface strength, core weight and rubber protrusion, and is slightly superior in circularity and processing cost but is inferior in vulcanization time to the core segment of Comparative example 2. It is thus shown that the core segment according to Comparative example 1 is insufficient for the application to the rigid core.

Furthermore, in the case of the core segment (Comparative example 3) made of aluminum alloy, the core segment of Comparative example 3 is slightly superior in surface strength and rubber protrusion, equivalent in core weight, vulcanization time and circularity, but inferior in processing cost to the core segment of Comparative example 2. It is thus shown that the core segment according to Comparative example 3 is insufficient for the application to the rigid core.

Moreover, in the case of the core segment (Comparative example 4) made of stainless steel, the core segment of Comparative example 4 is superior in surface strength, and is slightly superior in rubber protrusion and circularity, but inferior in core weight, vulcanization time and processing cost to the core segment of Comparative example 2. It is thus shown that the core segment according to Comparative example 4 causes problems in the application to the rigid core.

Although the present invention has been explained above on the basis of the embodiment, the present invention is not limited to the above-mentioned embodiment. The above-mentioned embodiment can be modified variously within the range identical and equivalent to that of the present invention.

### [DESCRIPTION of the REFERENCE SIGNS]

- 1: rigid core for tire molding
- 2: core body
- 3, 4: core segment
- 3a, 4a: circumferential end face of core segment
- H: center hole

## Claims

1. A rigid core for tire molding having a core body, on the outer surface of which a tire molding face is formed, and a cylindrical core to be inserted into the center hole of the core body, wherein
the core body is formed into a ring-shape by using a plurality of core segments divided in the circumferential direction of a tire, and
the core segments are made by using carbon fiber-reinforced resin.

2. A tire manufacturing method for manufacturing tires by using the rigid core for tire molding according to claim 1 having:
the raw tire molding step of molding a raw tire by sequentially bonding tire constituting members onto the tire molding face of the core body of the rigid core for tire molding, and
the vulcanizing molding step of vulcanizing and molding the raw tire by putting the molded raw tire into a vulcanizing mold together with the rigid core for tire molding.
